# NEW EUROPEAN PATENT SPECIFICATION

(11) **EP 2 139 721 B2**
(45) Date of publication and mention of the opposition decision: **25.02.2015**
(45) Mention of the grant of the patent: 04.05.2011
(21) Application number: 08709870.3
(22) Date of filing: 19.02.2008
(51) Int. Cl.: B60P 3/025

(54) **VENDING VAN WITH DEVICE FOR MOVING AND/OR UNLOADING COUNTERS AND RELATED HANDLING PROCEDURE**
VERKAUFSWAGEN MIT VORRICHTUNG ZUR BEWEGUNG UND/ODER AUSLADUNG VON TRESEN UND ENTSPRECHENDES HANDHABUNGSVORFAHREN
FOURGON DE VENTE AVEC DISPOSITIF POUR DEPLACER ET/OU DECHARGER DES COMPTOIRS ET PROCEDE MANIPULATION ASSOCIE

(30) Priority: 23.02.2007 IT VI20070053
(43) Date of publication of application: 06.01.2010
(73) Proprietor: Sperotto S.P.A. Carrozzerie Industriali, 36030 Sarcedo (IT)
(72) Inventor: BASILE, Giuseppe, I-36030 Sarcedo (IT)
(74) Representative: Grünecker, Kinkeldey, Stockmair & Schwanhäusser
(86) International application number: PCT/IB2008/000454
(87) International publication number: WO 2008/102257

(56) References cited:
- WO-A1-2005/070721
- DE-A1-102005 047 557
- DE-U1- 29 910 630
- FR-A- 1 270 079
- FR-A- 1 399 785
- FR-A- 2 265 323
- FR-A- 2 602 192
- FR-A- 2 742 975
- JP-A- 2006 151 153
- US-A- 5 108 122

## Description

The invention relates to the sector of vehicles used for itinerant sales, also called vending vans.

In particular, the present invention refers to vehicles used for itinerant sales that are equipped with a counter of the so-called unloadable type.

More in detail, the present invention relates to a vending van complete with a device for moving a counter and/or unloading it onto the ground, and a related handling procedure.

It is common knowledge that in the itinerant sales sector widespread use is made of vehicles equipped as vending vans and used for the transportation, preservation and display of goods for sale.

These vehicles usually have a counter for the sale of the products, as well as display cases on the walls and/or specific machinery such as refrigerators, ovens, deep fryers, slicers, etc.

Depending on needs, the counter may be fixed and incorporated in the vending van or it may be movable on the floor of the vending van and/or unloadable, i.e. suitable for being displaced outside the loading compartment of the vehicle used as a vending van and for being placed on the ground after the van has been parked.

This latter solution enables the products on sale to be displayed in direct contact with the public, and also enables more space to be exploited inside the vending van for the purpose of containing the other equipment mentioned above. According to the state of the art, the automated unloading of the counter is done with the aid of cranes comprising lifting arms located on the roof of the vending van and complete with cables or chains suitable for attaching to the counter being moved.

More in particular, these cranes lift the counter off the vehicle floor and move it horizontally in order to lower it outside the vehicle and rest it on the ground. Moreover, in these crane-based solutions with suspended cables the counter is deposited on the ground as close as possible to the side of the vending van and it is likewise reloaded from the same position.

This is done both to reduce the forces generated on the arms of the crane to a minimum during these handling procedures and also to avoid any instability of the vehicle, enabling the structure of the crane, and consequently also of the supporting walls of the vehicle used as a vending van, to be kept as light as possible.

Once the counter has been placed on the ground, the user must then take action manually to move it further away so as to create the corridor needed between the side of the vehicle and the counter, where he/she can work while selling the goods.

A first drawback of these solutions lies in that the loading compartment of the vehicle, and the walls of the loading compartment in particular, must be suitably reinforced in order to be able to sustain the weight both of the crane and of the load that it lifts, and this has a considerable negative influence on the cost of the vending van. It is worth adding here that the load can be as much as 2 metric tons.

Another drawback lies in that, being positioned in the upper part of the loading compartment of the vehicle used as a vending van, the crane raises the vehicle's centre of gravity, with a negative effect on its stability, making the vending van easily liable to unwanted oscillations and unbalancing.

Another drawback of these crane-based systems lies in that they only enable the counter to be placed a short distance from the side of the vehicle, and this distance is insufficient for the subsequent use of the counter on the ground. This solution consequently demands manual action by the user, as mentioned previously, to position the counter on the ground at a sufficient distance from the side of the vehicle to enable the counter to be comfortably used.

Other known solutions involve moving the counter by carrying it outside the vending van and keeping it lifted off the ground.

These solutions involve the use of complicated kinematic mechanisms consisting of a plurality of levers that are articulated with one another and that must move in a coordinated manner to ensure that the counter remains in a horizontal position during its displacement.

These systems are expensive and weak, and liable to break down, and they require frequent, and often troublesome and laborious maintenance.

Another drawback encountered with these known solutions lies in that the lifting means have a considerable power consumption when in operation because the weight to lift is considerable.

Another drawback relating to the previous one lies in that the lifting means have considerable overall dimensions, they are expensive and heavy, and they reduce the load-bearing capacity of the vehicle.

A further drawback lies in that they are structurally rather complex and noisy when in operation. A further example of a vending van according to the prior art is disclosed in document FR-A-2 265 323, or in WO 2005/070721 A1 the latter showing the features according to the preamble of the independent claims.

The object of the present invention is to overcome the aforementioned drawbacks.

In particular, a first object of the invention is to construct a vending van with a device for moving and/or unloading the counters used for sales that can be installed in vending vans and a handling procedure that enables the previously-mentioned drawbacks to be overcome.

Another object of the present invention is to construct a vending van with a fully automatic moving and/or unloading device that is particularly straightforward and efficient, and with a lower power consumption than the known devices and/or systems when in operation, for the same load.

Another object of the present invention is to construct a handling device that, installed in a vending van for which it is designed, has a negligible influence on the position of the centre of gravity of the van.

Another object of the present invention is to construct a device and a system capable of operating without generating any hazardous oscillations or unbalance in the vending van in which they are installed.

A further object of the present invention is to construct a vending van with a handling device and to implement a procedure that enables a counter to be moved from at least one resting position inside the vending van to at least one working position (preferably on the ground) for the sale of products, in such a way as to ensure easy access for the salespeople.

Another object of the present invention is to construct a vending van with a handling device that is easy to service and highly reliable.

Another object of the present invention is to construct a vending van with a handling device that is economical and easy to use, as well as being easy to construct, assemble and install.

Another object of the present invention is to construct a vending van with a counter moving and/or unloading device that also enables a quick and easy levelling of the counter in the working position to make it ready for use and arrange it in the most suitable manner for displaying and selling the goods.

The aforementioned objects are achieved by a vending van as described and characterised in the corresponding independent claims.

Advantageous embodiments form the object of the dependent claims.

The proposed solution advantageously enables the construction of a vending van with a counter moving and/or unloading device that enables the space inside the vehicle to be used at will and managed efficiently, exploiting its maximum capacity when the counter is moved outside the vending van.

This also enables an optimal management of the furniture behind the counter, particularly as concerns the dimensions of the shelving, refrigerators, ovens and any other machinery and equipment.

The proposed solution also advantageously enables the counter to be carried outside the vending van and lowered onto the ground at a greater distance from the side of the van than is normally possible using the known devices and/or systems, so that the salespeople can move with ease between the vending van and the counter.

Another advantage of the proposed solution is that it enables the construction of a vending van with a handling device that is more lightweight and quieter than the known devices and/or systems.

Another advantage of the proposed solution is that it enables the construction of a device and a system that do not substantially interfere with the load-bearing capacity of the vending van in which they are installed.

Another advantage of the proposed device is that it has minimal overall dimensions and the stability and balance of the vehicle are unaffected when it is used.

Another advantage of the proposed device and system is that they enable the counter to be raised and/or lowered on to the ground and to be brought to the required height while its plane remains horizontal, so that the consumers can be served in optimal conditions.

The aforesaid objects and advantages are illustrated in greater detail in the following description of several preferred embodiments of the invention, given as non-limiting examples with reference to the attached drawings, wherein:
- Figure 1 shows a schematic side view of an embodiment of a vending van constructed according to the invention;
- Figure 2 shows a schematic side view of the vending van of Figure 1 with open loading compartment;
- Figure 3 shows a schematic cross-sectional view of the vending van of Figure 1;
- Figure 4 shows another schematic cross-sectional view of the vending van of Figure 1 in a different configuration;
- Figure 5 shows a schematic view from above of several parts of the handling device installed in the vehicle shown in Figure 1;
- Figure 5a shows an enlarged schematic view from above of the parts shown in Figure 5;
- Figure 6 shows a schematic side view of the parts shown in Figure 5;
- Figure 7 shows a schematic front view of the parts shown in Figure 5;
- Figure 7a shows an enlarged schematic front view of the parts shown in Figure 5;
- Figure 8 shows another schematic view from above of some parts of the handling device installed in the vehicle shown in Figure 1;
- Figure 9 shows an enlarged detail of some of the parts shown in Figure 8 in a first working position;
- Figure 10 shows an enlarged detail of the parts shown in Figure 9 in a different working position;
- Figure 11 shows a schematic cross-sectional view of another example of embodiment of a vending van according to the invention with closed loading compartment;
- Figure 12 shows a schematic side view of the vending van shown in Figure 11 with open loading compartment and in a different working configuration;
- Figures 13 and 14 each show a schematic cross-sectional view of a further example of embodiment of a vending van according to the invention with open loading compartment in different working positions;
- Figures from 15 to 17 each show a schematic cross-sectional view of another example of embodiment of a vending van according to the invention with open loading compartment in different working positions;
- Figures from 18 to 28 each show a schematic cross-sectional view of the vending van of Figure 1 with open loading compartment in different working positions;
- Figures from 29 to 31 each show a schematic cross-sectional view of the vending van of Figure 15 with open loading compartment and in different working positions;

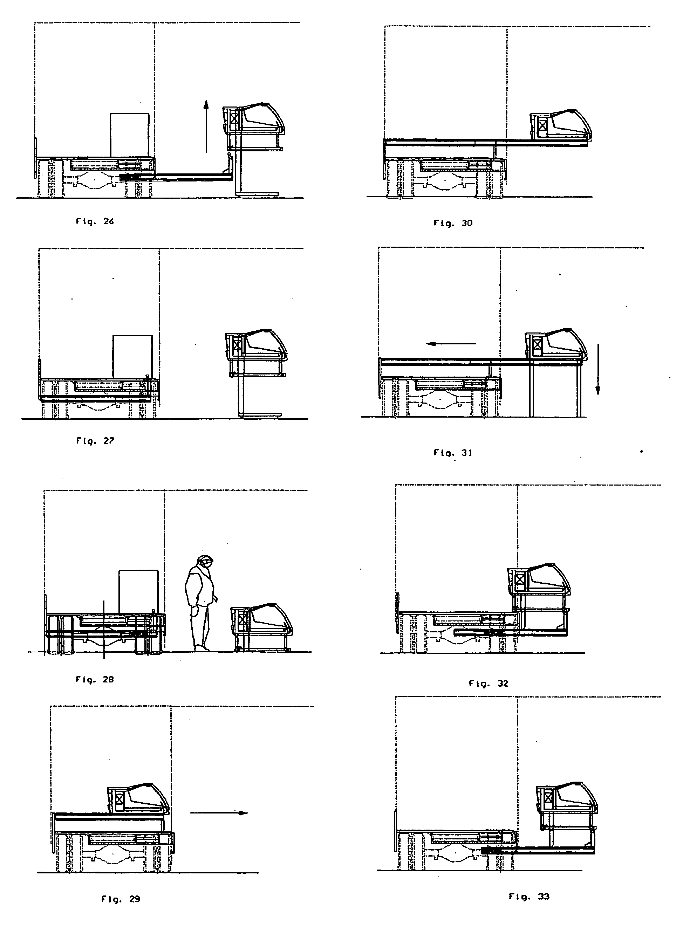

- Figures 32 and 33 each show a schematic cross-sectional view of a further example of embodiment of a vending van according to the invention with open loading compartment and in different working positions;

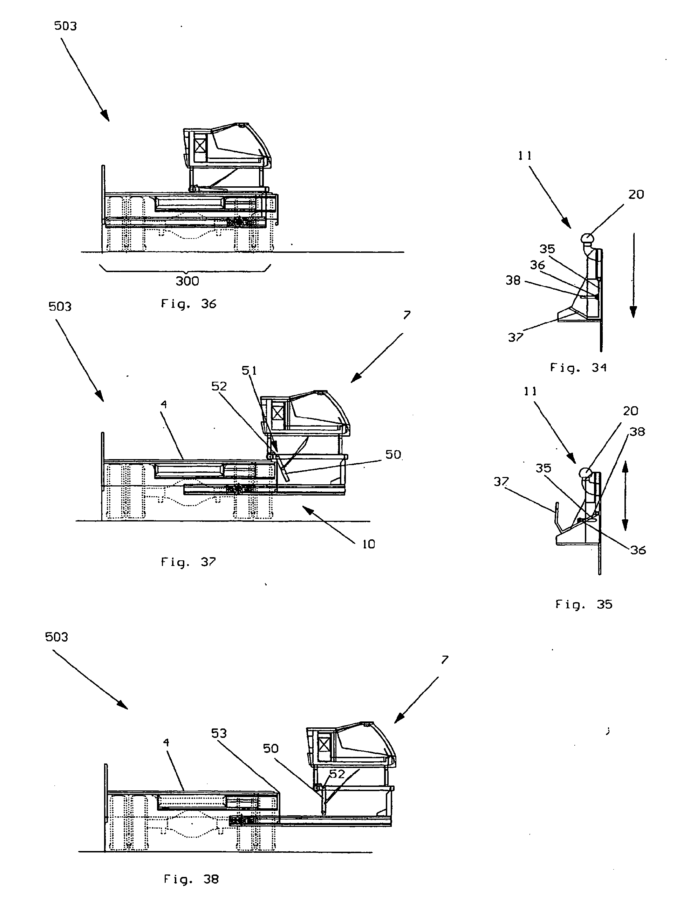

- Figures 34 and 35 each show a side view of a construction variant of some of the parts of the device;
- Figures from 36 to 38 each show a schematic cross-sectional view of another example of embodiment of a vending van according to the invention with open loading compartment in different working positions.

By way of introduction, it is important to underline that equivalent elements in the single embodiments are identified by the same numerical references.

In the event of any variation in the respective positions, the position indicators mentioned in the single examples of embodiment can be transferred to the new position using common sense. It is also important to underline that, for a better understanding of the schematic diagrams attached, some parts of the non-limiting examples of embodiment shown have been represented using dotted lines.

The embodiments of the invention described below refer to a vehicle equipped for itinerant sales of the so-called vending van type. Clearly, however, the proposed solution can also be applied to other types of vehicle requiring similar functions.

An embodiment of a vending van 500, fitted with a handling device 1, forming the object of the present invention, is illustrated in Figures from 1 to 3.

The vending van 500 comprises a motorized vehicle complete with a chassis 2 placed on wheels 3 and supporting a vehicle floor 4 corresponding to the loading area 5 of the vehicle, in which one or more counters 6, 7 are provided for displaying the goods on sale.

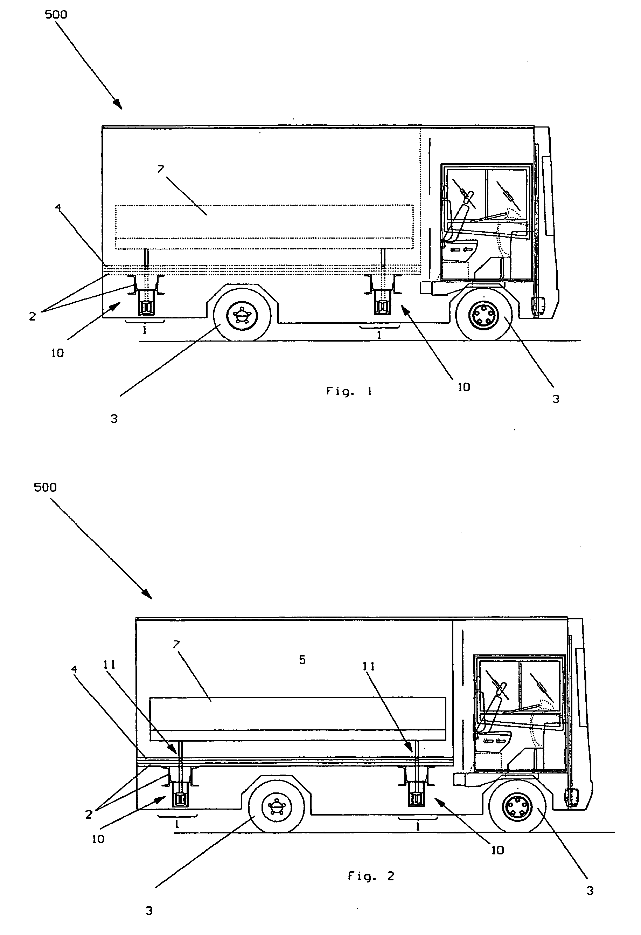

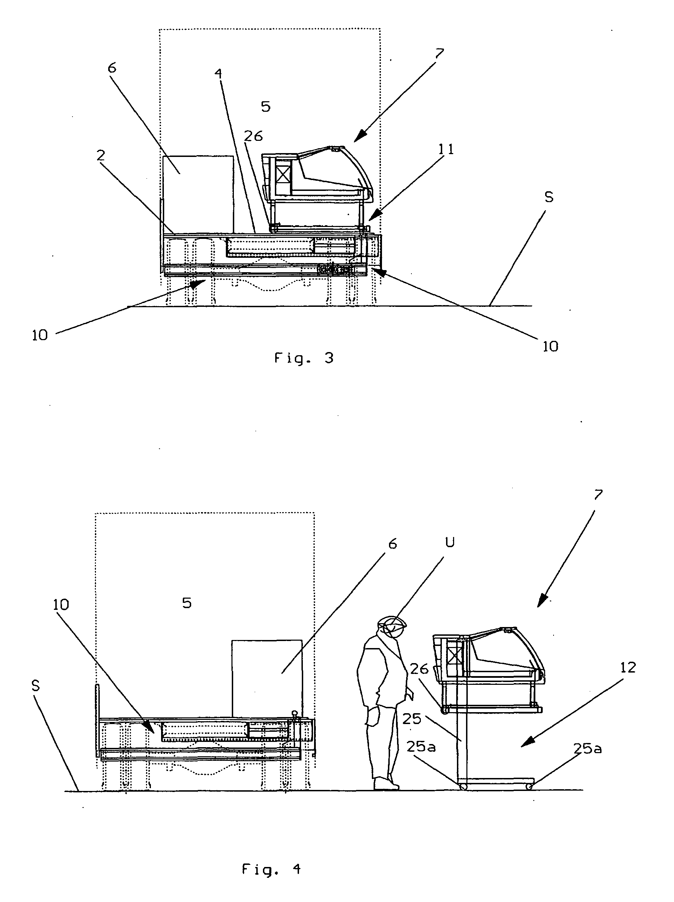

According to the invention, the handling device 1, illustrated particularly in Figures 2 and 3 using a continuous line, comprises one or more longitudinally-extending supporting elements 10, each movable with respect to a substantially horizontal plane and provided with means 11 for connecting them to a counter 7 that needs to be moved and is complete with withdrawable supporting means 12 shown in their working position in Figure 4 in particular.

Again according to the invention, each supporting element 10 is arranged so that it supports the counter 7 being moved.

More in particular, each supporting element 10 is preferably located underneath the counter 7 being moved, or alongside the counter 7, as explained in greater detail below.

This advantageously makes it possible to reduce to a minimum the operations to be performed both on the loading compartment 5 and on the other parts of the vehicle 500 equipped as a vending van. More in particular, this solution makes it unnecessary to take action on the structure of the loading compartment 5 of the vehicle 500 to provide the necessary structural reinforcement needed particularly for the known crane-based solutions.

According to the preferred non-limiting embodiment of the invention illustrated, there are two supporting elements 10, as shown particularly in Figures 1 and 2. As shown in Figures from 5 to 7 in particular, each of these comprises a first longitudinal member 15 slidingly installed on a holder 16 integrally attached to the chassis 2 of the vehicle 500.

More in particular, the longitudinal member 15 comprises a member with an I-shaped profile that substantially extends across the entire width of the vehicle. This advantageously makes it possible to maximise the displacement of the counter 7 being moved along the horizontal plane, thus enabling the user to unload it into a position further away from the side of the vehicle 500 than in the known solutions. To further increase this distance, another embodiment of the invention involves the use of a telescopic member 15.

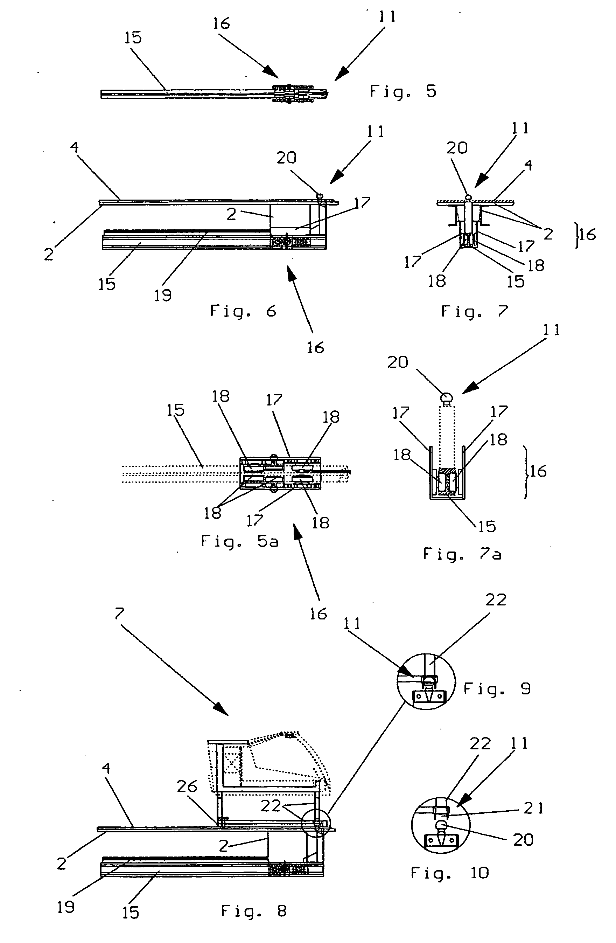

Each holder 16, shown in detail in Figures 5a and 7a, comprises two brackets 17 facing each other and integrally attached to the chassis 2 of the vehicle 500, provided with bearings 18, on which the above-mentioned member 15 is slidingly supported.

The member 15 is free to move along its longitudinal axis towards the unloading side of the loading compartment 5 of the vending van 500 that, in the example shown, is located laterally, on one side of the loading compartment and crosswise to the longitudinal axis of the vehicle 500.

It should also be noted that the supporting elements 10 are located underneath the floor 4 of the vehicle 500.

This prevents them from occupying space in the loading compartment 5 of the vehicle 500, which can thus be advantageously used entirely for loading the goods, while also maximising the length of the member 15 that, as mentioned previously, substantially extends across the entire width of the vehicle 500, and of the loading compartment 5 in particular.

The member 15 is displaced with the aid of moving means comprising actuators that may be operated manually, electrically, pneumatically or hydraulically, such as an electric motor, a pneumatic piston or a piston driven by oil or any other fluid, or any other means.

More in particular, in the preferred non-limiting embodiment illustrated, these handling means comprise a linear actuator with a rack 19, shown in Figure 6, integrally attached to the member 15 engaging with a gear wheel (not shown) that is integrally attached to the shaft of an electric motor fixed to the chassis 2 and governed by a control unit.

The control unit cooperates with means for recording the position occupied by the counter 7 and/or by each supporting element 10 and/or by the supporting means 12, preferably comprising position sensors, e.g. linear encoders and/or photocells, and/or optical and/or ultrasound and/or laser devices.

According to another non-limiting preferred embodiment not illustrated, each of the supporting elements comprises a telescopic member consisting of a fixed portion and at least one movable portion.

In this case, the fixed portion is integrally attached to the vehicle chassis and the movable portion is free to move towards the unloading side of the loading compartment of the vending van. This advantageously enables a further increase in the space achievable between the van and the counter when the latter is unloaded.

The connection means 11 are of the quick coupling/ uncoupling type and preferably comprise a male part and a female part.

More in particular, in the non-limiting embodiment illustrated, the male part comprises a shaped head 20, shown particularly in Figures from 6 to 10, substantially consisting of a portion of a sphere, while the female part comprises a seat 21 with a conjugated profile, visible in the enlarged detail shown in Figure 10.

The shaped head 20 is integrally attached to the supporting element 10 and located in the vicinity of one end of the movable portion of the member 15.

The seat 21 is provided on an element 22 integrally attached to the counter 7 to be moved. The element 22 is located in the vicinity of the front part of the counter 7. This advantageously enables the stroke of the member 15 to be minimised, ensuring that the position occupied by the counter 7 inside the loading compartment 5 enables an optimal use of the available space.

Clearly, in other embodiments of the invention, the shaped head 20 may be integrally attached to the counter 7 to be moved and the seat 21 with the conjugated profile may belong to the supporting element 10.

It is likewise clear that, in other solutions, said means 11 may be replaced by equivalent, even non-mechanical means, such as electromagnetic connections, etc. In particular, Figures 34 and 35 show a particular embodiment of said means 11, in which the shaped head 20 is installed at one end of a movable element 35, revolvingly coupled with a pin 36 that moves inside a guide 38 consisting of a groove.

The movable element 35 can be operated by the user via operating means comprising a handle 37 provided at the other end of the element 35. Taking action on the handle 37, the user moves the element 35 that in turn moves the head 20. More in particular, by bringing the handle 37 into the position shown in Figure 34, the user makes the head 20 come into an extended position suitable for coupling with the seat 21.

Vice versa, the user can turn the handle 37 into the position shown in Figure 35 to withdraw the head 20 into a lowered position and thus disconnect it from the seat 21.

This movement may also be automated by means of an actuator, e.g. of electrical type, to enable the coupling and uncoupling of the head 20 to/from the seat 21, thus simplifying the procedure for connecting/disconnecting and unloading the counter.

As for the withdrawable supporting means 12 on the counter 7, these preferably comprise withdrawable legs 25, suitable for standing on the ground S, of the type shown, for instance, in Figure 4.

More in particular, in this preferred embodiment, the withdrawable legs 25 are powered and controlled manually or automatically by a control unit that coordinates their movement as a function, as explained later on, of the position occupied by the supporting elements 10.

More precisely, in the preferred non-limiting embodiment illustrated, these legs 25 are substantially L-shaped and are provided with wheels 25a that enable the displacement of the counter 7 when it is on the ground S.

The legs 25 are also long enough to enable the counter to be raised to a greater height than the plane defined by the supporting elements 10. As explained better later on, this enables the counter 7 to be coupled to or uncoupled from the supporting elements 10 and, more in particular, it enables the coupling/uncoupling of the head 21 and the seat 22, as can be seen in the details shown in Figures 9 and 10.

Moreover, once the counter 7 has been uncoupled from the supporting elements 10, the legs 25 enable the height of the counter 7 to be adjusted in relation to the ground S.

Each leg is moved by an actuator that is not shown and comprises, for instance, an electric motor with a revolving shaft fitted with a gear wheel that engages with a worm screw integrally attached to the movable part of each leg 25. Clearly, said movement can also be achieved using similar means, for instance using linear actuators such as hydraulic pistons, etc.

The counter 7 to be moved is also provided at the back with wheels 26 (also shown in Figure 3) suitable for being placed in contact with the floor 4 of the vending van 500. These wheels 26 cooperate with the supporting elements 10 to enable the displacement of the counter 7 inside the loading compartment 5 of the vending van 500.

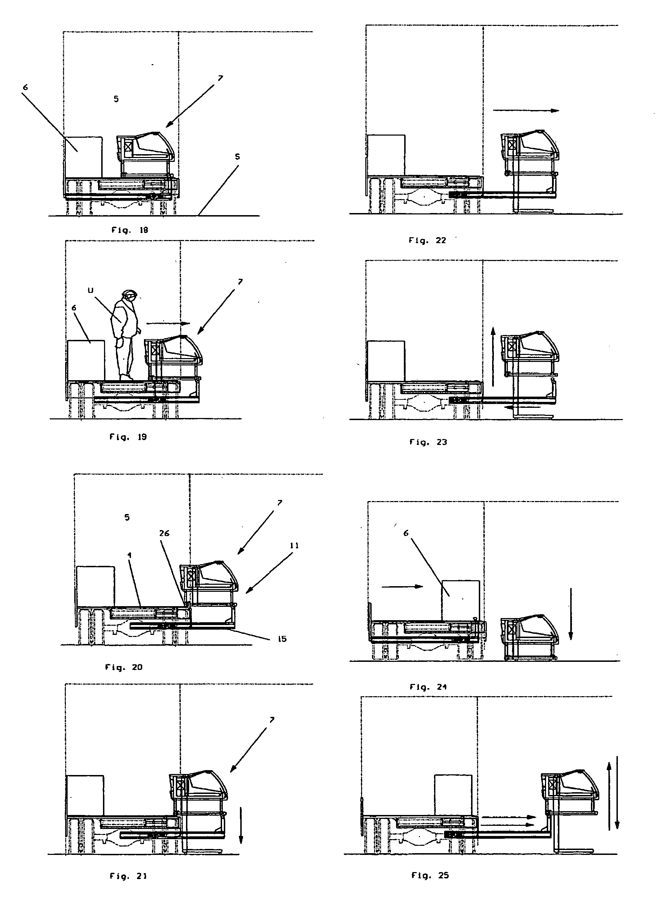

More in particular, they enable the counter 7 to be arranged, for instance, in at least one first position for travel (shown in Figure 3) and in at least a second position for use inside the loading compartment 5 (shown in Figure 19).

Said solution advantageously enables the counter 7 to be moved without the need to provide for any interruptions on the surface of the floor 4 of the loading compartment 5.

The vehicle floor 4 also has a through groove in line with each member 15, enabling the passage of the shaped heads.

In another embodiment not illustrated herein, in addition to being withdrawable, the legs 25 are also revolvingly coupled to the counter 7. More in particular, they are hinged along a substantially horizontal axis and can rotate with respect to said axis in order to move from a first substantially horizontal position into a second substantially vertical position in order to be extended/withdrawn.

This enables a further reduction in their overall dimensions.

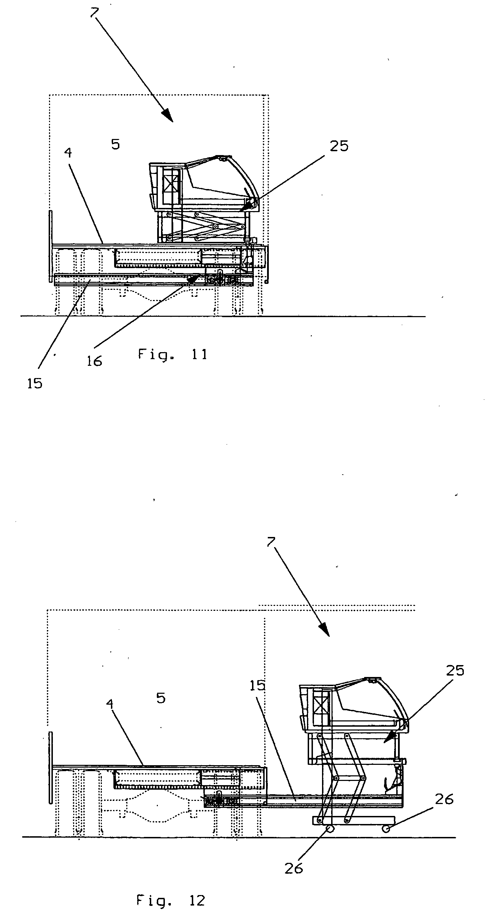

In another embodiment of the invention, shown particularly in Figures 11 and 12, the withdrawable legs 25 are made with a so-called parallelogram movement. Of course, in other embodiments, these legs may also be operated manually by the user.

Another non-limiting embodiment of a vending van complete with the handling device forming the object of the present invention is distinguishable from the previous one due to the fact that the counter 7 has no rear wheels 26 and is placed so that it rests only on the supporting elements 10.

In this case, each supporting element 10 preferably has a pair of shaped heads, one at the front and one at the rear, that engage in corresponding seats integral with the counter 7. Clearly, in this case, the vehicle floor 4 has openings suitable for enabling the passage of the shaped heads and, more in general, of the parts of the elements 10 on which the counter 7 rests.

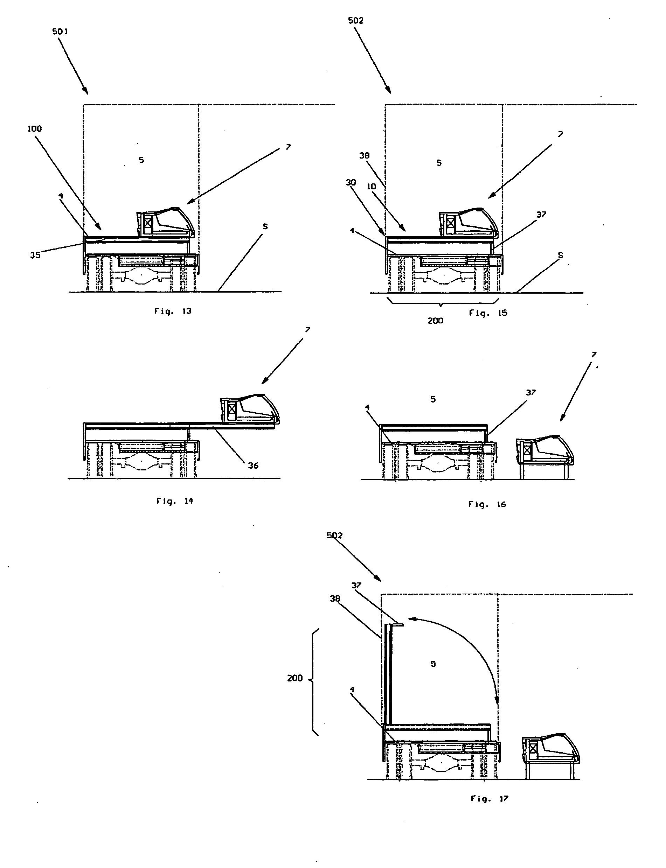

Another non-limiting embodiment of a vending van 501 complete with the handling device forming the object of the present invention, indicated as a whole by the numeral 100 in Figures 13 and 14, differs from the previous embodiment due to the fact that the supporting elements 10 are located on top of the vehicle floor 4 and alongside the counter to be moved 7.

More in particular, the supporting elements consist of two telescopic elements comprising a fixed portion 35 and a movable portion 36 slidingly coupled with said fixed portion and moved by an actuator governed by a control unit.

Here again, the counter to be moved 7 is placed so that it rests on the member 15, thus enabling the previously-stated objects to be achieved. Moreover, in this solution too, the movable portion 36 extends preferably and substantially across the entire width of the vehicle, and particularly of the vehicle floor 4.

A further non-limiting embodiment of a vending van 502 complete with the handling device forming the object of the present invention, indicated as a whole by the numeral 200 in Figures 15 to 17, differs from the previous embodiment in that each supporting element 10 is pivot anchored at one end 30, so that it can be brought from a substantially horizontal working position, shown in Figures 15 and 16, to a substantially vertical resting position shown in Figure 17. When the element 10 is in the working position, the other end stands on the vehicle floor 4, on a foot or other such element 37.

More in particular, in the preferred non-limiting embodiment illustrated, when the element 10 is in its resting position, it lies with its longer side facing the side wall 38 of the loading compartment 5 of the vehicle 502.

This solution also has the advantage of requiring no reinforcement measures on the walls surrounding the loading compartment 5 of the vehicle used as a vending van.

Another non-limiting embodiment of a vending van 503 complete with the handling device forming the object of the present invention, indicated as a whole by the numeral 300 in Figures 36 to 38, differs from the previous embodiments in that the means 12 for supporting the counter 7 posteriorly comprise at least one supporting leg 50 hinged at one end 51. In the particular embodiment shown, the counter 7 has two legs 50 placed at either end of the counter 7, in the vicinity of its sides. Each leg 50 is designed so as to drop, due to the effect of gravity, from a first substantially horizontal position, shown in Figure 36, to a vertical position shown in Figure 38. More in particular, the movement of each leg 50 from one position to another is achieved by simply moving the counter 7 horizontally, and particularly when the counter is moved outside the vehicle 503 and/or when it is unloaded/loaded. During said movement, in fact, each leg 50 tends, due to the effect of gravity, to rotate around the horizontal axis of the corresponding hinge 52. More in particular, when the counter 7 is placed outside the vehicle 503, the leg 50, also guided by the edge 53 of the vehicle floor 4, rotates clockwise and comes into a vertical position, resting on the element 10 as shown in Figure 38. Vice versa, when the user proceeds to place the counter 7 inside the loading compartment 5, each leg 50 engages with the edge 53 of the floor 4 of the vehicle 503, as shown in Figure 38, thus rotating anticlockwise until it reaches its initial resting position, shown in Figure 36.

The operation of the handling device is now described with reference to the particular embodiment shown in Figures from 1 to 3, since this does not differ substantially from the other embodiments described with reference to Figures from 18 to 28.

In practice, having reached the place where the counter 7 is to be positioned, the user proceeds to open the side of the vehicle, switching to the configuration shown in Figures 2 and 18. Then he/she operates the handling device 1 by means of the control unit.

Said unit activates the means for actuating the supporting elements 10, so that they begin to move along their longitudinal axis, carrying the counter 7 with them, and coming into the position shown in Figure 19, for instance, in which the user U can climb onto the vehicle floor 4 and work inside the loading compartment 5.

Alternatively, the user U can proceed to rest the counter 7 on the ground S by taking further action on the means for interfacing with the control unit, consisting substantially of push-button controls.

In this case the control unit moves the counter 7, cooperating with the recording means, until the rear part of the counter 7 comes close to the side of the vehicle floor 4, as shown in particular in Figure 20. In this position, the counter 7 is supported at the front by the supporting elements 10 and at the back by the wheels 26.

Once the counter 7 has reached this position, the control unit activates the actuators of the means 12 supporting the counter 7, which lower the legs 25, as shown in Figure 21, until they rest on the ground S. When the recording means confirm that the legs 25, fitted with the wheels 25a, have been placed on the ground S, the control unit again activates the actuators of the supporting elements 10 to make them bring the counter 7 to the required distance from the side of the vehicle 500.

Having reached said distance, as shown in the example in Figure 22, the user can decide whether to detach the counter 7 from the vehicle or not. In the former case, he takes action again on the means for interfacing with the control unit, which again activate the actuators of the means 12 supporting the counter 7, which raise the counter so as to bring it up to a higher level than that of the supporting elements 10, as shown in particular in Figure 23.

This enables the counter 7 to be released from the supporting elements 10 and, more precisely, it enables the uncoupling of the shaped head 20 from the seat 21, as shown in Figure 23 and in the details in Figures 9 and 10. Alternatively, adopting the solution illustrated in Figures 34 and 35, the user can take action on the handle 37 to release the counter 7, so that there is no need to raise the counter to a higher position in order to release it.

The control unit then activates the actuators to bring the supporting elements 10 back to their resting position and, if necessary, to lower the counter, bringing it down to the required height, which can be established by the user, as shown in Figure 24, for instance.

Then the user can take action manually on the control unit, e.g. by means of suitable push buttons, to position the counter at the required height.

The movable supporting element can also be advantageously used to further separate the counter 7 from the vehicle 500.

More in particular, the proposed solution enables the handling device to be used both to rest the counter 7 on the ground (i.e. to unload it) and, once it is on the ground, to further separate the counter 7 from the side of the vending van 500, thus enabling it to be placed at the most suitable distance.

This is done by releasing the counter 7 from the supporting elements 10 according to the method described above and illustrated in Figure 23, and then lowering it so as to place it at a height substantially coinciding with the height of the supporting elements 10, as shown in Figure 24.

Then the actuators of the supporting elements 10 can be activated so as to extract once again the members 15 and the counter 7 that, being preferably mounted on wheels, is thus moved further away from the vehicle 500.

Alternatively, the counter 7 may be provided at the rear with further seats suitable for containing the shaped heads integrally attached to the members 15, so that the counter 7 can be coupled to or released from said elements 10 even from said positions, as shown in Figure 25, enabling its subsequent further displacement and uncoupling, as shown in Figures from 26 to 28, in much the same way as described above.

The procedure for loading the counter 7 inside the loading compartment 5 basically follows the previously-described steps in reverse order.

According to the proposed solution, the supporting element or member 10 is advantageously located in the vicinity of the plane defined by the vehicle's axles and consequently this has little influence on the vehicle's centre of gravity.

In other words, the centre of gravity remains close to the ground S because the entire structure of the handling and supporting device is located close to the ground.

Figures 29 to 31 show similar phases for handling and positioning the counter 7 using the solution illustrated in Figure 14.

The solution shown in Figures from 15 to 17 differs from the previous embodiment in that the user can use the means for interfacing with the control unit to move the two supporting elements 10 from the horizontal position shown in Figure 15 to the vertical position shown in Figure 17 when the counter 7 is placed on the ground.

Finally, as shown in Figures 32 and 33, the device can also be designed so that the counter 7 and, more particularly, the means 12 for supporting the counter 7 are suitable for resting on the supporting elements 10, as shown in particular in Figure 33.

Moreover, the power needed for the actuators and/or the control unit can be provided by the vehicle or by separate power supplies by means, for instance, of electric batteries and/or the mains electricity supply.

The proposed solution advantageously enables the user to raise or lower the counter 7 automatically when the counter is positioned on the ground resting on the supporting legs 12.

In addition, according to a preferred embodiment of the invention, the control unit cooperates with a preferably electronic apparatus for the automatic levelling of the counter 7 by means of action on the supporting legs that rest on the ground, which raises and lowers them so as to make the counter 7 perfectly horizontal and thus able to contain devices such as weighing scales and the like without any problems of a legal nature.

From the above considerations, it is clear that the proposed solution enables the set objects to be achieved and the previously-mentioned drawbacks to be overcome.

The means 5 advantageously guarantee that the first part does not cause any impact, oscillations and/or swinging and/or bouncing when it reaches the second resting position.

In fact, the proposed solution enables the first part to be brought gently and quietly to a stop in the second resting position, without giving rise to any type of stress, vibration or impact, nor any swaying, bouncing or swinging.

Another advantage of the proposed solution lies in that it enables the first part to be stopped in the second resting position by means of a virtually linear speed reduction.

Although the invention has been described with reference to the attached drawings, in the executive stage it may undergo modifications that come within the scope of the claims that follow and that will consequently be protected by the present patent.

It is important to underline that, where characteristics mentioned in the following claims are followed by reference signs and symbols, these are intended merely to facilitate the reader of the claim and shall not limit its interpretation in any way. It is also important to underline that all the component parts may be replaced with other, technically equivalent elements, and that any materials may be used, provided that they are compatible with their contingent use, and that the various elements may have any size, according to need.

## Claims

1. A vending van (500, 501, 502, 503) comprising a motorized vehicle with a chassis (2) placed on wheels (3) and supporting a vehicle floor (4),
and one or more counters (6,7) to be moved,
said vending van comprising a handling device (1, 100, 200, 300) for moving one of said one or more counters,
said handling device (1, 100, 200, 300) comprising one or more longitudinally extending supporting elements (10),
each movable in relation to its longitudinal axis, said one or more supporting elements (10) being arranged so as to support said counter (7) to be moved,
and lying underneath or alongside said counter to be moved (7)
**characterized in that**
said one or more supporting elements (10) are located underneath said vehicle floor (4)
and **in that**
when placed inside the loading compartment, said counter rests on said supporting elements (10) and on wheels (26) provided at the rear of said counter and suitable for being placed in contact with said vehicle floor (4) so as to enable the displacement of the counter (7) inside the loading compartment of the van.

2. A vending van (500, 501, 502, 503) comprising a motorized vehicle with a chassis (2) placed on wheels (3) and supporting a vehicle floor (4),
and one or more counters (6,7) to be moved,
said vending van comprising a handling device (1, 100, 200, 300) for moving one of said one or more counters,
said handling device (1, 100, 200, 300) comprising one or more longitudinally extending supporting elements (10),
each movable in relation to its longitudinal axis, said one or more supporting elements (10) being arranged so as to support said counter (7) to be moved,
and lying underneath or alongside said counter to be moved (7)
**characterized in that**
said one or more supporting elements (10) are located underneath said vehicle floor (4)
and **in that**
when placed inside the loading compartment, said counter rests on said supporting elements (10), said supporting elements (10) comprising a pair of shaped heads, one at the front and one at the rear, that engage in corresponding seats integral with the counter (7), said vehicle floor (4) having openings for enabling the passage of the parts of the supporting elements (10) on which the counter (7) rests so as to enable the displacement of the counter (7) inside the loading compartment of the van.

3. A vending van according to one of claims 1 or 2, **characterized in that** said one or more supporting elements (10) are fixed to said chassis (2).

4. A vending van according to any of the previous claims, **characterized in that** each of said one or more supporting elements (10) comprises a first longitudinally extending member (15) slidingly installed on a holder (16) integrally attached to said chassis (2).

5. A vending van according to claim 4, **characterized in that** said longitudinal member (15) consists of a member with a preferably I-shaped profile.

6. A vending van according to claims 4 or 5, **characterized in that** said first longitudinal member extends substantially across the entire width of said vehicle floor.

7. A vending van according to one of claims 4 to 6, **characterized in that** said holder (16) comprises two brackets (17) facing each other and complete with bearings (18) on which said longitudinal member (15) is slidingly supported.

8. A vending van according to one of claims 4 to 7, **characterized in that** said longitudinal member (15) is moved by handling means.

9. A vending van according to claim 8, **characterized in that** said handling means comprise actuators.

10. A vending van according to claim 9, **characterized in that** said actuators are manually or electrically, or pneumatically or hydraulically operated.

11. A vending van according to claim 10, **characterized in that** said handling means comprise a linear actuator with a rack (19) integrally attached to said longitudinal member (15) and engaging with a gearwheel integrally attached to a motorized shaft.

12. A vending van according to one of claims 8 to 11, **characterized in that** it also comprises a unit for controlling said handling means.

13. A vending van according to claim 12, **characterized in that** said control unit cooperates with means for recording the position occupied by said counter (7) and/or by each supporting element (10).

14. A vending van according to any of the previous claims, **characterized in that** each of said one or more supporting elements (10) comprises a telescopic member.

15. A vending van according to any of the previous claims, **characterized in that** each of said one or more supporting elements (10) is complete with means (11) for connecting it to said counter (7) to be moved.

16. A vending van according to claim 15, **characterized in that** said connection means (11) are of the quick coupling/release type.

17. A vending van according to claim 16, **characterized in that** said connection means comprise a male part and a female part.

18. A vending van according to claim 17, **characterized in that** one of said male or female parts is integrally attached to said counter (7) to be moved and located in the vicinity of its front portion.

19. A vending van according to one of claims 15 to 16, **characterized in that** said connection means (11) are of electromagnetic type.

20. A vending van according to claim 16, **characterized in that** said connection means (11) comprise a movable element (35) complete with a shaped head (20), revolvingly coupled with a pin (36) that can move inside a guide (38), which can be operated by maneuvering means (37) in order to move said head from an extended position to a lowered position.

21. A vending van according to any of the previous claims, **characterized in that** said counter is complete with withdrawable supporting means (12).

22. A vending van according to claim 21, **characterized in that** said withdrawable supporting means (12) preferably comprise withdrawable legs (25) suitable for standing on the ground (S).

23. A vending van according to claim 22, **characterized in that** said legs are motorized and governed by a control unit that coordinates their movement according to the position occupied by said one or more supporting elements (10).

24. A vending van according to one of claims 22 and 23, **characterized in that** said legs (25) are fitted with wheels (26).

25. A vending van according to one of claims 22 to 24, **characterized in that** said legs (25) enable the height of said counter (7) to be adjusted with respect to the ground (S).

26. A vending van according to claim 25 **characterized in that** said legs (25) are long enough to enable said counter to be raised to a height above the plane defined by said one or more supporting elements (10), so that said counter (7) can be coupled to or released from said one or more supporting elements (10).

27. A vending van according to one of claims 21 and 22, **characterized in that** said supporting means (12) comprise at least one supporting leg (50) hinged at one end (51) and suitable for dropping, due to the effect of gravity, from a first substantially horizontal position to a substantially vertical position.

28. A vending van according to any of the previous claims, **characterized in that** at least one of said one or more supporting elements (10) is pivot anchored preferably in the vicinity of one of its ends (30), so that it can be brought from a substantially horizontal position to a substantially vertical position.

29. A vending van according to claim 23, **characterized in that** said control unit cooperates with an apparatus for the automatic leveling of said counter (7) in order to govern said supporting means.

## Patentansprüche

1. Ein Verkaufswagen (500, 501, 502, 503), ein motorisiertes Fahrzeug mit einem Fahrgestell (2) auf Rädern (3) umfassend, welches einen Fahrzeugboden (4) trägt sowie eine oder mehrere, zu bewegende Verkaufstheken (6, 7), wobei der besagte Verkaufswagen eine Betätigungsvorrichtung (1, 100, 200, 300) für die Bewegung der besagten einen oder mehreren Verkaufstheken umfasst, wobei die besagte Betätigungsvorrichtung (1, 100, 200, 300) ein oder mehrere, längliche Abstützelemente (10) umfasst, welche jeweils bezüglich ihrer Längsachse bewegbar sind, wobei das besagte eine bzw. die besagten mehreren Abstützelemente (10) so angeordnet sind, dass sie die besagte, zu bewegende Verkaufstheke (7) abstützen und unterhalb oder neben der besagten, zu bewegenden Verkaufstheke (7) positioniert sind, **dadurch gekennzeichnet, dass** das besagte eine bzw. die besagten mehreren Abstützelemente (10) sich unterhalb dem besagten Fahrzeugboden (4) befinden, und dass die besagte Verkaufstheke, wenn sie im Ladebereich positioniert ist, auf den Abstützelementen (10) und auf an der Rückseite der besagten Verkaufstheke befindlichen Rädern (26) aufliegt, welche geeignet sind, in Kontakt mit dem besagten Fahrzeugboden (4) plaziert zu werden um die Bewegung der Verkaufstheke (7) innerhalb des Ladebereichs des Verkaufswagens zu erlauben.

2. Ein Verkaufswagen (500, 501, 502, 503), ein motorisiertes Fahrzeug mit einem Fahrgestell (2) auf Rädern (3) umfassend, welches einen Fahrzeugboden (4) trägt sowie eine oder mehrere, zu bewegende Verkaufstheken (6, 7), wobei der besagte Verkaufswagen eine Betätigungsvorrichtung (1, 100, 200, 300) für die Bewegung der besagten einen oder mehreren Verkaufstheken umfasst, wobei die besagte Betätigungsvorrichtung (1, 100, 200, 300) ein oder mehrere, längliche Abstützelemente (10) umfasst, welche jeweils bezüglich ihrer Längsachse bewegbar sind, wobei das besagte eine bzw. die besagten mehreren Abstützelemente (10) so angeordnet sind, dass sie die besagte, zu bewegende Verkaufstheke (7) abstützen und unterhalb oder neben der besagten, zu bewegenden Verkaufstheke (7) positioniert sind, **dadurch gekennzeichnet, dass** das besagte eine bzw. die besagten mehreren Abstützelemente (10) sich unterhalb dem besagten Fahrzeugboden (4) befinden, und dass die besagte Verkaufstheke, wenn sie im Ladebereich positioniert ist, auf den Abstützelementen (10) aufliegt, wobei die Abstützelemente (10) ein Paar von geformten Köpfen umfassen, einer an der Vorderseite und einer an der Rückseite, die in entsprechenden Aufnahmen, die in der Verkaufstheke (7) eingebaut sind, eingreifen, wobei der Boden (4) Öffnungen zum Ermöglichen des Durchgangs der Teile der Abstützelemente (10), auf denen die Verkaufstheke (7) aufliegt, umfasst, um die Bewegung der Verkaufstheke (7) innerhalb des Ladebereichs des Verkaufswagens zu erlauben.

3. Ein Verkaufswagen gemäß Patentanspruch 1 oder 2, **dadurch gekennzeichnet, dass** das besagte eine bzw. die besagten mehreren Abstützelemente (10) an besagtem Fahrgestell (2) befestigt sind.

4. Ein Verkaufswagen gemäß eines jeden der vorstehenden Patentansprüche, **dadurch gekennzeichnet, dass** das besagte eine bzw. die besagten mehreren Abstützelemente (10) ein erstes, längliches Element (15) umfassen, welches gleitend an einem vollständig an besagtem Fahrgestell (2) befestigten Halter (16) installiert ist.

5. Ein Verkaufswagen gemäß Patentanspruch 4, **dadurch gekennzeichnet, dass** das besagte, längliche Element (15) aus einem Element mit vorzugsweise I-förmigem Profil besteht.

6. Ein Verkaufswagen gemäß Patentanspruch 4 oder 5, **dadurch gekennzeichnet, dass** das besagte, erste längliche Element sich im Wesentlichen über die gesamte Breite des besagten Fahrzeugbodens erstreckt.

7. Ein Verkaufswagen gemäß eines der Patentansprüche von 4 bis 6, **dadurch gekennzeichnet, dass** der besagte Halter (16) zwei Bügel (17) umfasst, die einander gegenüber liegen und Lager (18) aufweisen, auf denen das besagte, längliche Element (15) gleitend gelagert ist.

8. Ein Verkaufswagen gemäß eines der Patentansprüche von 4 bis 7, **dadurch gekennzeichnet, dass** das längliche Element (15) durch Betätigungsmittel bewegt wird.

9. Ein Verkaufswagen gemäß Patentanspruch 8, **dadurch gekennzeichnet, dass** die Betätigungsmittel Aktuatoren umfassen.

10. Ein Verkaufswagen gemäß Patentanspruch 9, **dadurch gekennzeichnet, dass** die besagten Aktuatoren manuell oder elektrisch oder pneumatisch oder hydraulisch betrieben sind.

11. Ein Verkaufswagen gemäß Patentanspruch 10, **dadurch gekennzeichnet, dass** die besagten Betätigungsmittel einen Linear-Aktuator mit einer Zahnstange (19) umfassen, welche komplett an dem besagten länglichen Element (15) befestigt ist und in die ein Zahnrad eingreift, welches komplett an einer angetriebenen Welle befestigt ist.

12. Ein Verkaufswagen gemäß eines der Patentansprüche von 8 bis 11, **dadurch gekennzeichnet, dass** er außerdem eine Einheit zur Steuerung besagter Betätigungsmittel umfasst.

13. Ein Verkaufswagen gemäß Patentanspruch 12, **dadurch gekennzeichnet, dass** die besagte Steuereinheit mit Mitteln zur Speicherung der von der besagten Verkaufstheke (7) und/oder von jedem Abstützelement (10) eingenommenen Position zusammenwirkt.

14. Ein Verkaufswagen gemäß eines jeden der vorstehenden Patentansprüche, **dadurch gekennzeichnet, dass** jedes des besagten einen oder der mehreren Abstützelemente (10) ein Teleskopelement umfasst.

15. Ein Verkaufswagen gemäß eines jeden der vorstehenden Patentansprüche, **dadurch gekennzeichnet, dass** jedes der besagten, einen oder mehreren Abstützelemente (10) Mittel (11) zu seiner Verbindung mit der besagten, zu bewegenden Verkaufstheke (7) umfasst.

16. Ein Verkaufswagen gemäß Patentanspruch 15, **dadurch gekennzeichnet, dass** die besagten Verbindungsmittel (11) vom schnell ein- und ausrastenden Typ sind.

17. Ein Verkaufswagen gemäß Patentanspruch 16, **dadurch gekennzeichnet, dass** die besagten Verbindungsmittel (11) einen männlichen und einen weiblichen Teil umfassen.

18. Ein Verkaufswagen gemäß Patentanspruch 17, **dadurch gekennzeichnet, dass** einer der besagten männlichen oder weiblichen Teile komplett an der besagten, zu bewegenden Verkaufstheke (7) befestigt ist und sich in der Nähe ihrer Frontseite befindet.

19. Ein Verkaufswagen gemäß eines der Patentansprüche 15 oder 16, **dadurch gekennzeichnet, dass** die besagten Verbindungsmittel (11) vom elektromagnetischen Typ sind.

20. Ein Verkaufswagen gemäß Patentanspruch 16, **dadurch gekennzeichnet, dass** die besagten Verbindungsmittel (11) ein mobiles Element (35) mit einem geformten Kopf (20) umfassen, der drehend mit einem Zapfen (36) gekuppelt ist, welcher sich innerhalb einer Führung (38) bewegen kann, die anhand von Steuermitteln (37) betätigt werden kann, um den besagten Kopf aus einer ausgefahrenen Position in eine abgesenkte Position zu bewegen.

21. Ein Verkaufswagen gemäß eines jeden der vorstehenden Patentansprüche, **dadurch gekennzeichnet, dass** die besagte Verkaufstheke mit einziehbaren Abstützmitteln (12) versehen ist.

22. Ein Verkaufswagen gemäß Patentanspruch 21, **dadurch gekennzeichnet, dass** die einziehbaren Abstützmittel (12) vorzugsweise einziehbare Beine (25) umfassen, die geeignet sind, auf dem Boden (S) zu stehen.

23. Ein Verkaufswagen gemäß Patentanspruch 22, **dadurch gekennzeichnet, dass** die besagten Beine motorisiert sind und durch eine Steuereinheit geregelt werden, welche ihre Bewegung je nach der von dem besagten einen oder den mehreren Abstützelementen (10) eingenommenen Position steuert.

24. Ein Verkaufswagen gemäß Patentanspruch 22 oder 23, **dadurch gekennzeichnet, dass** die besagten Beine (25) Räder (26) aufweisen.

25. Ein Verkaufswagen gemäß eines der Patentansprüche von 22 bis 24, **dadurch gekennzeichnet, dass** die besagten Beine (25) die Regulierung der Höhe der besagten Verkaufstheke (7) bezüglich des Bodens (S) erlauben.

26. Ein Verkaufswagen gemäß Patentanspruch 25, **dadurch gekennzeichnet, dass** die besagten Beine (25) lang genug sind, um die besagte Verkaufstheke auf eine Höhe oberhalb der durch das besagte eine oder mehrere Abstützelement (10) definierten Ebene anzuheben, so dass sich die besagte Verkaufstheke (7) in das/die bzw. aus dem/den besagten einen oder mehreren Abstützelement(en) (10) ein- oder ausrasten lässt.

27. Ein Verkaufswagen gemäß Patentanspruch 21 oder 22, **dadurch gekennzeichnet, dass** die besagten Abstützmittel (12) wenigstens ein an einem Ende (51) angelenktes Stützbein (50) umfassen, das geeignet ist, durch Wirkung der Schwerkraft aus einer ersten, im Wesentlichen waagerechten Position in eine im Wesentlichen senkrechte Position zu fallen.

28. Ein Verkaufswagen gemäß eines jeden der vorstehenden Patentansprüche, **dadurch gekennzeichnet, dass** das besagte wenigstens eine oder die mehreren Abstützelemente (10) vorzugsweise in der Nähe von einem ihrer Enden (30) drehend verankert sind, so dass sie aus einer im Wesentlichen waagerechten Position in eine im Wesentlichen senkrechte Position gebracht werden können.

29. Ein Verkaufswagen gemäß Patentanspruch 23, **dadurch gekennzeichnet, dass** die besagte Steuereinheit mit einem Geräts zur Selbstnivellierung der besagten Verkaufstheke (7) zusammenwirkt, um die besagten Abstützmittel zu regeln.

## Revendications

1. Camion magasin (500, 501, 502, 503) comprenant un véhicule motorisé avec un châssis (2) positionné sur des roues (3) et supportant un plancher de véhicule (4), et un ou plusieurs comptoirs (6, 7) à déplacer, ledit camion magasin comprenant un dispositif de manipulation (1, 100, 200, 300) pour le déplacement d'un desdits un ou plusieurs comptoirs, ledit dispositif de manipulation (1, 100, 200, 300) comprenant un ou plusieurs éléments de support (10) s'etendant longitudinalement, chacun étant mobile par rapport à son axe longitudinal, lesdits un ou plusieurs éléments de support (10) étant disposés de manière à supporter ledit comptoir (7) à déplacer, et s'appuyant au-dessous ou à côté dudit comptoir à déplacer (7) **caractérisé en ce que** lesdits un ou plusieurs éléments de support (10) sont positionnés au-dessous dudit plancher de véhicule (4) et **en ce que** quand ledit comptoir est positionné à l'intérieur du compartiment de charge, il se pose sur lesdits éléments de support (10) et sur des roues (26) prévues sur la partie arrière dudit comptoir et aptes à être mises en contact avec ledit plancher de véhicule (4) de manière à permettre le déplacement du comptoir (7) a l'intérieur du compartiment de charge du camion.

2. Camion magasin (500, 501, 502, 503) comprenant un véhicule motorisé avec un châssis (2) positionné sur des roues (3) et supportant un plancher de véhicule (4), et un ou plusieurs comptoirs (6, 7) à déplacer, ledit camion magasin comprenant un dispositif de manipulation (1, 100, 200, 300) pour le déplacement d'un desdits un ou plusieurs comptoirs, ledit dispositif de manipulation (1, 100, 200, 300) comprenant un ou plusieurs éléments de support (10) s'etendant longitudinalement, chacun étant mobile par rapport à son axe longitudinal, lesdits un ou plusieurs éléments de support (10) étant disposés de manière à supporter ledit comptoir (7) à déplacer, et s'appuyant au-dessous ou à côté dudit comptoir à déplacer (7) **caractérisé en ce que** lesdits un ou plusieurs éléments de support (10) sont positionnés au-dessous dudit plancher de véhicule (4) et **en ce que** quand ledit comptoir est positionné à l'intérieur du compartiment de charge, il se pose sur lesdits éléments de support (10), les éléments de support (10) comprenant une paire de têtes formée, une à l'avant et une à l'arrière, qui se engagent dans des sièges correspondants solidaires du comptoir (7), ledit plancher (4) ayant des ouvertures pour permettre le passage des parties des éléments de support (10) sur lesquel repose le comptoir (7) de manière à permettre le déplacement du comptoir (7) a l'intérieur du compartiment de charge du camion.

3. Camion magasin selon la revendication 1 ou 2, **caractérisé en ce que** lesdits un ou plusieurs éléments de support (10) sont fixés audit châssis (2).

4. Camion magasin selon l'une quelconque des revendications précédentes, **caractérisé en ce que** chacun desdits un ou plusieurs éléments de support (10) comprend un premier élément s'étendant longitudinalement (15) monté de manière coulissante sur un support (16) solidaire dudit châssis (2).

5. Camion magasin selon la revendication 4, **caractérisé en ce que** ledit élément longitudinal (15) se compose d'un élément avec un profil préférablement en I.

6. Camion magasin selon la revendication 4 ou 5, **caractérisé en ce que** ledit premier élément longitudinal s'étend essentiellement à travers toute la largeur dudit plancher de véhicule.

7. Camion magasin selon l'une des revendications de 4 à 6, **caractérisé en ce que** ledit support (16) comprend deux brides (17) l'une en face de l'autre et dotées de roulements (18) sur lesquels ledit élément longitudinal (15) s'appuie de manière coulissante.

8. Camion magasin selon l'une des revendications de 4 à 7, **caractérisé en ce que** ledit élément longitudinal (15) est déplacé par des moyens de manipulation.

9. Camion magasin selon la revendication 8, **caractérisé en ce que** lesdits moyens de manipulation comprennent des actionneurs.

10. Camion magasin selon la revendication 9, **caractérisé en ce que** lesdits actionneurs sont actionnés manuellement, électriquement, pneumatiquement ou hydrauliquement.

11. Camion magasin selon la revendication 10, **caractérisé en ce que** lesdits moyens comprennent un actionneur linéaire avec une crémaillère (19) solidaire dudit élément longitudinal (15) et s'engageant avec une roue dentée solidaire d'un arbre motorisé.

12. Camion magasin selon l'une des revendications de 8 à 11, **caractérisé en ce qu'**il comprend également une unité pour commander lesdits moyens de manipulation.

13. Camion magasin selon la revendication 12, **caractérisé en ce que** ladite unité de commande coopère avec des moyens aptes à enregistrer la position occupée par ledit comptoir (7) et/ou par chaque élément de support (10).

14. Camion magasin selon l'une quelconque des revendications précédentes, **caractérisé en ce que** chacun desdits un ou plusieurs éléments de support (10) comprend un élément télescopique.

15. Camion magasin selon l'une quelconque des revendications précédentes, **caractérisé en ce que** chacun desdits un ou plusieurs éléments de support (10) est doté de moyens aptes à la connexion audit comptoir (7) à déplacer.

16. Camion magasin selon la revendication 14), **caractérisé en ce que** lesdits moyens de connexion (11) sont du type à enclenchement/déclenchement rapide.

17. Camion magasin selon la revendication 16, **caractérisé en ce que** lesdits moyens de connexion comprennent une partie mâle et une partie femelle.

18. Camion magasin selon la revendication 17, **caractérisé en ce que** l'une desdites parties mâle ou femelle est solidaire dudit comptoir (7) à déplacer et positionnée près de sa partie avant.

19. Camion magasin selon l'une des revendications de 15 à 16, **caractérisé en ce que** lesdits moyens de connexion (11) sont du type électromagnétique.

20. Camion magasin selon la revendication 16, **caractérisé en ce que** lesdits moyens de connexion (11) comprennent un élément mobile (35) doté d'une tête galbée (20), reliée de manière pivotante avec un pivot (36) qui peut bouger à l'intérieur d'un guidage (38), qui peut être actionné par des moyens de manoeuvre (37) de manière à déplacer ladite tête d'une position d'extension à une position abaissée.

21. Camion magasin selon l'une quelconque des revendications précédentes, **caractérisé en ce que** ledit comptoir est doté des moyens de support escamotables (12).

22. Camion magasin selon la revendication 21, **caractérisé en ce que** lesdits moyens de support escamotables (12) comprennent préférablement des jambes escamotables (25) aptes à se poser au sol (S).

23. Camion magasin selon la revendication 22, **caractérisé en ce que** ledites jambes sont motorisées et commandées par une unité de commande qui coordonne leur mouvement selon la position occupée par lesdits un ou plusieurs éléments de support (10).

24. Camion magasin selon l'une des revendications 22 et 23, **caractérisé en ce que** lesdites jambes (25) sont fixées avec des roues (26).

25. Camion magasin selon l'une des revendications de 22 à 24, **caractérisé en ce que** lesdites jambes (25) permettent de régler la hauteur dudit comptoir (7) qui doit être réglé par rapport au sol (S).

26. Camion magasin selon la revendication 25, **caractérisé en ce que** lesdites jambes (25) ont une longueur suffisante pour permettre audit comptoir d'être soulevé à une hauteur au-dessus du plan défini par lesdits un ou plusieurs éléments de support (10), de façon à ce que ledit comptoir (7) puisse être accouplé ou déclenché desdits un ou plusieurs éléments de support (10).

27. Camion magasin selon l'une des revendications 21 et 22, **caractérisé en ce que** lesdits moyens de support (12) comprennent au moins une jambe de support (50) fixée avec charnière sur une extrémité (51) et aptes à se déplacer, par l'effet de la force de gravité, d'une première position essentielllement horizontale à une position essentiellement verticale.

28. Camion magasin selon l'une quelconque des revendications précédentes, **caractérisé en ce qu'**au moins un desdits un ou plusieurs éléments de support (10) est ancré de manière pivotante préférablement près d'une de ses extrémités (30), de façon à ce qu'il puisse être déplacé d'une position essentiellement horizontale à une position essentiellement verticale.

29. Camion magasin selon la revendication 23, **caractérisé en ce que** ladite unité de commande coopère avec un appareil pour le nivelage automatique dudit comptoir (7) de façon à commander lesdits moyens de support.
